# EUROPÄISCHE PATENTSCHRIFT

(11) **EP 1 369 610 B1**
(45) Veröffentlichungstag und Bekanntmachung des Hinweises auf die Patenterteilung: **06.10.2010**
(21) Anmeldenummer: 03007296.1
(22) Anmeldetag: 01.04.2003
(51) Int. Cl.: F16D 21/06, F16D 25/0638, F16D 25/10

(54) **Mehrfach-Kupplungseinrichtung mit wenigstens zwei Lamellen-Kupplungsanordnungen**
Multiple clutch device with at least two multi-disc clutch units
Dispositif à embrayages multiples avec au moins deux ensembles d'embrayages multidisques

(30) Priorität: 29.05.2002 DE 10223892
(43) Veröffentlichungstag der Anmeldung: 10.12.2003
(73) Patentinhaber: ZF Sachs AG, 97424 Schweinfurt (DE)
(72) Erfinder: Grosspietsch, Wolfgang, Dipl.-Ing.(FH), 97422 Schweinfurt (DE)

(56) Entgegenhaltungen:
- EP-A- 0 969 219
- WO-A-01/42673
- DE-A- 10 004 179
- DE-A- 10 111 202

## Beschreibung

Die Erfindung betrifft eine Mehrfach-Kupplungseinrichtung, insbesondere Doppel-Kupplungseinrichtung, für einen Kraftfahrzeug-Antriebsstrang zur Momentenübertragung zwischen einer Antriebseinheit und einem Getriebe des Antriebsstrangs, umfassend mehrere unabhängig voneinander betätigbare Lamellen-Kupplungsanordnungen, von denen eine erste Lamellen-Kupplungsanordnung einer ersten Getriebeeingangswelle des Getriebes zugeordnet ist und eine zweite Lamellen-Kupplungsanordnung einer zweiten Getriebeeingangswelle des Getriebes zugeordnet ist, wobei von der ersten und der zweiten Lamellen-Kupplungsanordnungen eine wenigstens ein radial äußeres Lamellenpaket aufweist, das wenigstens ein radial inneres Lamellenpaket der anderen Lamellen-Kupplungsanordnung zumindest bereichsweise radial außen umgibt, wobei wenigstens eine der Lamellen-Kupplungsanordnungen wenigstens ein Lamellenpaket aufweist, das mehrere beidseitig einen Reibbelag aufweisenden Belaglamellen und mehrere mit diesen in Reibeingriff bringbaren, beidseitig reibbelaglosen Gegenlamellen umfasst.

Eine derartige, auch als "Doppelkupplung" bezeichenbare Kupplungseinrichtung, die zwei nasslaufende Lamellen-Kupplungsanordnungen aufweist, ist beispielsweise aus DE 100 04 179 A1 bekannt. Bei der Auslegung derartiger Kupplungseinrichtungen in Bezug auf ein Fahrzeug und Fahrsituationen ist zu beachten, dass das mittels einer Kupplungsanordnung übertragbare Moment auch vom maßgeblichen Reibradius abhängt. Für eine gegebene Zahl von Reibflächen und einen gegebenen Anpressdruck kann eine Lamellen-Kupplungsanordnung mit kleinerem Reibradius ein kleines Moment als eine Lamelle-Kupplungsanordnung mit größerem Reibradius übertragen.

Insbesondere bei Frontantriebsfahrzeugen mit einer axial sehr kurzen Kupplungsglocke gibt diese die Randbedingungen für die Gestaltung und die Bauart von Doppelkupplungen vor. Bei gleichem zu übertragenem Drehmoment bauen nasslaufende Doppelkupplungen kleiner als trockenlaufende Doppelkupplung. Dadurch, dass gemäß den Konstruktionen der DE 100 04 179 A1 die Kupplungsanordnungen bzw. deren Lamellenpakete radial übereinander angeordnet werden, kann die axiale Baulänge besonders reduziert werden. Es resultiert aus dieser Bauweise aber ein kleinerer Reibradius für die radial innen liegende Kupplungsanordnung bzw. deren Lamellenpaket.

Herkömmlich weisen bei Doppelkupplungen der genannten Art mit radial übereinander angeordneten Lamellen-Kupplungsanordnungen die radial innere und die radial äußere Lamellen-Kupplungsanordnung bei gegebener, für beide Kupplungsanordnungen im Wesentlichen gleicher axialer Baulänge die gleiche Anzahl von Belaglamellen und Gegenlamellen und damit die gleiche Anzahl von Reibflächenpaaren auf. Nutzt man die radial äußere Lamellen-Kupplungsanordnung als thermisch höher beanspruchte Anfahrkupplung und die radial innere Lamellen-Kupplungsanordnung als Schaltkupplung, wird von den inhärent gegebenen Möglichkeiten optimal Gebrauch gemacht. Die unterschiedlich großen Reibradien und damit unterschiedlich großen Reibflächen für die innere und die äußere Kupplungsanordnung bereiten dann insoweit keine Probleme. Es ist aber doch wünschenswert, dass die innere und die äußere Kupplungsanordnung zumindest annähernd jeweils für das volle Motormoment zuzüglich Sicherheitszuschlag ausgelegt ist. Aus dem kleineren Radius der radial inneren Kupplungsanordnung bzw. der geringeren Reibfläche pro Lamelle dieser Kupplungsanordnung folgt aber, dass bei gleicher Anpresskraft das maximal übertragbare Reibmoment der radial inneren Kupplungsanordnung bei gleicher Anzahl von Reibflächen kleiner als das maximal übertragbare Reibmoment der radial äußeren Kupplungsanordnung ist. Die Angleichung der übertragbaren Drehmomente für die innere und die äußere Kupplungsanordnung kann auf Grundlage der angegebenen Bauweise nur durch eine entsprechende Steigerung der maximalen Anpresskräfte für die radial innere Kupplungsanordnung erzielt werden. Hier stellt der Wert der maximal zulässigen Flächenpressung eine wichtige Randbedingung dar, die die maximale Anpresskraft und damit das maximal übertragbare Moment festlegt.

Demgegenüber schlägt die Erfindung für die eingangs angesprochene Kupplungseinrichtung vor, dass das radial innere Lamellenpaket mehrere auf einer Seite einen Reibbelag aufweisende und auf der anderen Seite reibbelaglose Außenlamellen und mehrere auf einer Seite reibbelaglose und auf der anderen Seite einen Reibbelag aufweisende Innenlamellen umfasst, die derart in gegenseitigen Reibeingriff bringbar sind, dass jeweils eine einen Reibelag aufweisende Lamellenseite mit einer reibbelaglosen Lamellenseite in Reibeingriff tritt.

Der Erfindungsvorschlag weicht von dem Paradigma ab, dass man zur Gewährleistung einer gleichmäßigen Erwärmung der Lamellen eines Lamel- . lenpakets dieses aus beidseitig einen Reibbelag aufweisenden Belaglamellen und mit diesen in Reibeingriff bringbaren, beidseitig reibbelaglosen Gegenlamellen aufbauen sollte, insbesondere um infolge einer einseitigen Erwärmung ein so genanntes "Schirmen" (eine Verformung der Lamelle ähnlich ein Verbiegen eines Bimetalls aufgrund unterschiedlicher Temperaturen und dementsprechend unterschiedlicher thermischer Expansion auf den beiden Lamellenseiten bzw. in entsprechenden Lamellen-Materialabschnittschichten) der einzelnen Lamellen zu verhindern. Nach dem Erfindungsvorschlag werden die belaglosen "Rückseiten" der Lamellen gewissermaßen als Gegenlamelle für die Belagseite der nächsten Lamelle genutzt. Diese "Gegenlamellen" werden dementsprechend nur einseitig erwärmt und sind damit eher der Gefahr eines "Schirmens" infolge der Erwärmung ausgesetzt. Andererseits entfällt ein Nachteil der bisherigen Bauweise, nämlich dass die beidseitig jeweils einen Belag tragenden Trägerlamellen durch die Beläge thermisch isoliert sind, und insofern keine Wärmekapazität zur Zwischenspeicherung von Wärme bereitstellen. Da die erfindungsgemäße Bauweise es ermöglicht, bezogen auf eine vorgegebene axiale Baulänge auf einfache Weise eine größere Zahl von einseitig einen Belag aufweisenden Lamellen und dementsprechend eine größere Zahl von Reibflächenpaaren unterzubringen, kann überdies die zu leistende Reibarbeit auf eine größere Zahl von Lamellen verteilt werden, so dass wesentliche thermische Probleme in der Praxis tatsächlich nicht zu befürchten sind. Durch die Bereitstellung einer größeren Anzahl von Reibflächenpaaren kann überdies bezogen auf eine gegebene Anpresskraft und eine gegebene Lamellengeometrie ein größeres maximales Drehmoment über die betreffende Kupplungsanordnung übertragen werden.

Es ist aber durchaus zweckmäßig, für das radial äußere Lamellenpaket bei der herkömmlichen Bauweise zu bleiben, nämlich dass dieses mehrere beidseitig einen Reibbelag aufweisende Belaglamelle und mehrere mit diesen in Reibeingriff bringbare, beidseitig reibbelaglose Gegenlamellen umfasst.

Bevorzugt stellt das radial innere Lamellenpaket bezogen auf eine axiale Bezugs-Baulänge eine größere Zahl an Reibflächenpaaren als das radial äußere Lamellenpaket bereit, um dem maximal übertragbaren Drehmomente für die innere und die äußere Kupplungsanordnung einander anzugleichen.

Eine besonders bevorzugte Ausführungsform zeichnet sich dadurch aus, dass die auf einer Seite einen Reibbelag aufweisenden und auf der anderen Seite reibbelaglosen Innenlamellen und die auf einer Seite einen Reibbelag aufweisenden und auf der anderen Seite reibbelaglosen Außenlamellen des radial inneren Lamellenpakets zumindest näherungsweise die gleiche axiale Dicke aufweisen oder/und dünner als die reibbelaglosen Gegenlamellen des radial äußeren Lamellenpakets sind.

Die beidseitig einen Reibbelag aufweisenden Belaglamellen können als Außenlamellen und die beidseitig reibbelaglosen Gegenlamellen können als Innenlamellen ausgeführt sein. Es ist aber auch möglich, die beidseitig einen Reibbelag aufweisenden Belaglamellen als Innenlamellen und die beidseitig reibbelaglosen Gegenlamellen als Außenlamellen auszuführen.

Wie beim oben angesprochenen Stand der Technik kann es sich bei den Lamellen-Kupplungsanordnungen um für einen Betrieb unter Einwirkung eines Betriebsmediums, insbesondere Kühlöls, vorgesehene Kupplungsanordnungen handeln, denen im Betrieb Betriebsmedium von einer Betriebsmediumversorgung zuführbar ist. Die Kupplungsanordnungen können vorteilhaft vermittels eines jeweiligen hydraulischen Nehmerzylinders auf hydraulischem Wege betätigbar sein.

Die Erfindung betrifft ferner einen Kraffahrzeug-Antriebsstrang mit einer Antriebseinheit und einem Getriebe und einer dazwischen angeordneten Kupplungseinrichtung nach der Erfindung. Der das radial äußere Lamellenpaket aufweisenden Kupplungsanordnung kann vorteilhaft wenigstens ein Anfahrgang des Getriebes zugeordnet sein. Insbesondere kann vorgesehen sein, dass die radial innere Kupplungsanordnung im Wesentlichen nicht als Anfahr-, sondern - zumindest in der Regel - nur als Schaltkupplung eingesetzt wird, so dass die maximal anstehende Thermobelastung geringer als bei der radial äußeren Kupplungsanordnung ist und damit das oben angesprochene "Schirmen" der Lamellen vermieden oder zumindest deutlich gemildert wird.

Die Erfindung wird im Folgenden anhand einem in den Figuren gezeigten Ausführungsbeispiel näher erläutert. Die Erläuterung geht dabei von einer in Fig. 1 gezeigten Doppelkupplung herkömmlicher Bauweise entsprechend DE 100 04 179 A1 aus.
- Fig. 1: zeigt in einer teilgeschnittenen Darstellung eine in einem Antriebsstrang eines Kraftfahrzeugs zwischen einem Getriebe und einer Antriebseinheit angeordnete Doppelkupplung mit zwei Lamellen-Kupplungsanordnungen, die eine Ausführungsvariante einer in offengelegten deutschen Patentanmeldungen offenbarten Doppelkupplungskonstruktionen der Anmelderin entspricht und einen Ausgangspunkt für die Erfindung darstellt.
- Fig. 2: zeigt in einer Detailansicht entsprechend Fig. 1 eine mögliche Ausführung der Lamellenpakete einer entsprechenden Doppelkupplung in Übereinstimmung mit der Erfindung.

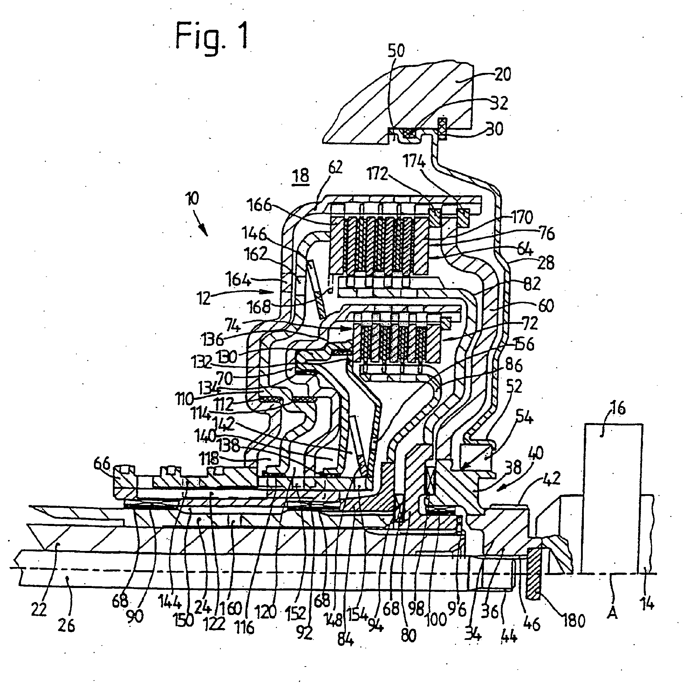

Fig. 1 zeigt eine in einem Antriebsstrang 10 zwischen einer Antriebseinheit und einem Getriebe angeordnete Doppelkupplung 12. Von der Antriebseinheit, beispielsweise eine Brennkraftmaschine, ist in Fig. 1 nur eine Abtriebswelle 14, gegebenenfalls Kurbelwelle 14, mit einem zur Ankopplung eines nicht dargestellten Torsionsschwingungsdämpfers dienenden Koppelende 16 dargestellt. Das Getriebe ist in Fig. 1 durch einen eine Getriebegehäuseglocke 18 begrenzenden Getriebegehäuseabschnitt 20 und zwei Getriebeeingangswellen 22 und 24 repräsentiert, die beide als Hohlwellen ausgebildet sind, wobei die Getriebeeingangswelle 22 sich im Wesentlichen koaxial zur Getriebeeingangswelle 24 durch diese hindurch erstreckt. Im Inneren der Getriebeeingangswelle 22 ist eine Pumpenantriebswelle angeordnet, die zum Antrieb einer getriebeseitigen, in Fig. 1 nicht dargestellten Ölpumpe dient.

Als Eingangsseite der Doppelkupplung 12 dient eine Kupplungsnabe 34, die sich durch eine zentrale Öffnung des Deckels 28 in Richtung zur Antriebseinheit erstreckt und über eine Außenverzahnung 42 mit dem nicht dargestellten Torsionsschwingungsdämpfer gekoppelt ist.

An der Nabe 34 ist ein auch als "Momentenübertragungsglied" oder "Mitnehmer" bezeichenbares Trägerblech 60 drehfest angebracht, das zur Drehmomentübertragung zwischen der Nabe 34 und einem Außenlamellenträger 62 einer ersten Lamellen-Kupplungsanordnung 64 dient. Das Trägerblech 60 greift hierzu mit einer Verzahnung in die die Außenlamellen im Sinne einer Drehmitnahme ankoppelnde Verzahnung des Außenlamellenträgers 62 ein. Der Außenlamellenträger 62 erstreckt sich in Richtung zum Getriebe und nach radial innen zu einem Ringteil 66, an dem der Außenlamellenträger drehfest angebracht ist und das mittels einer Axial- und Radial-Lageranordnung 68 an den beiden Getriebeeingangswellen 22 und 24 derart gelagert ist, dass sowohl radiale als auch axiale Kräfte an den Getriebeeingangswellen abgestützt werden. Die Axial- und Radial-Lageranordnung 68 ermöglicht eine Relativverdrehung zwischen dem Ringteil 66 einerseits und sowohl der Getriebeeingangswelle 22 als auch der Getriebeeingangswelle 24 andererseits.

Am Ringteil 66 ist axial weiter in Richtung zur Antriebseinheit ein Außenlamellenträger 70 einer zweiten Lamellen-Kupplungsanordnung 72 drehfest angebracht, deren Lamellenpaket 74 vom Lamellenpaket 76 der ersten Lamellen-Kupplungsanordnung ringartig umgeben wird. Die beiden Außenlamellenträger 62 und 70 sind durch das Ringteil 66 drehfest miteinander verbunden und stehen gemeinsam über das mittels einer Außenverzahnung mit dem Außenlamellenträger 62 in formschlüssigem Drehmomentübertragungseingriff stehende Trägerblech 60 mit der Kupplungsnabe 34 und damit - über den nicht dargestellten Torsionsschwingungsdämpfer - mit der Kurbelwelle 14 der Antriebseinheit in Momentenübertragungsverbindung. Bezogen auf den normalen Momentenfluss von der Antriebseinheit zum Getriebe dienen die Außenlamellenträger 62 und 70 jeweils als Eingangsseite der Lamellen-Kupplungsanordnung 64 bzw. 72.

Auf der Getriebeeingangswelle 22 ist mittels einer Keilnutenverzahnung oder dergleichen ein Nabenteil 80 eines Innenlamellenträgers 82 der ersten Lamellen-Kupplungsanordnung 64 drehfest angeordnet. In entsprechender Weise ist auf der radial äußeren Getriebeeingangswelle 24 mittels einer Keilnutenverzahnung oder dergeichen ein Nabenteil 84 eines Innenlamellenträger 86 der zweiten Lamellen-Kupplungsanordnung 72 drehfest angeordnet. Bezogen auf den Regel-Momentenfluss von der Antriebseinheit in Richtung zum Getriebe dienen die Innenlamellenträger 82 und 86 als Ausgangsseite der ersten beziehungsweise zweiten Lamellen-Kupplungsanordnung 64 bzw. 72.

In die Doppelkupplung 12 sind Betätigungskolben zur Betätigung der Lamellen-Kupplungsanordnungen auf hydraulischem Wege integriert, im Falle des gezeigten Ausführungsbeispiels zur Betätigung der Lamellen-Kupplungsanordnungen im Sinne eines Einrückens.

Betreffend weitere Einzelheiten und vorteilhafte Ausgestaltungen der Doppelkupplung 12 wird auf die Offenlegungsschriften DE 100 04 179 A1, DE 100 04 186 A1, DE 100 04 189 A1, DE 100 04 190 A1, DE 100 04 195 A1 verwiesen, deren Offenbarung in den Offenbarungsgehalt der vorliegenden Anmeldung einbezogen wird. Es wird hierzu darauf hingewiesen, dass Fig. 1 der vorliegenden Anmeldung der Fig. 1 dieser zu einer Patentfamilie gehörenden Anmeldungsserie entspricht.

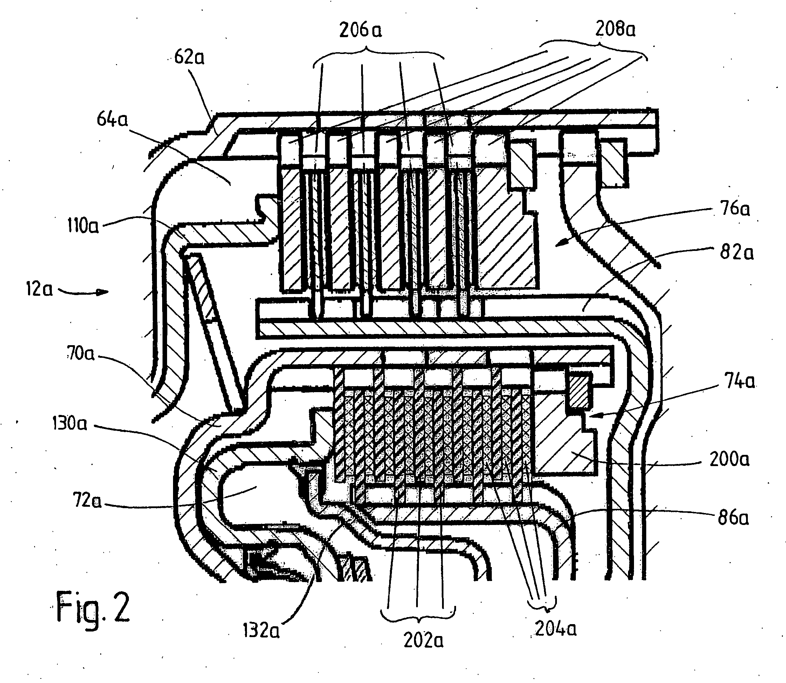

Anzumerken zur Doppekupplung der Fig. 1 ist noch, dass beim Lamellenpaket 76 der radial äußeren Kupplungsanordnung die Außenlamellen (d. h. die mit dem Außenlamellenträger 62 drehfest gekoppelten Lamellen) - bis auf die beiden Endlamellen - als beidseitig Belag tragende Lamellen und die Innenlamellen (d. h. die mit dem Innenlamellenträger 82 drehfest gekoppelten Lamellen) als belaglose Lamellen ausgeführt sind, wohingegen beim Lamellenpaket 74 der radial inneren Kupplungsanordnung die Außenlamellen (d. h. die mit dem Außenlamellenträger 70 drehfest gekoppelten Lamellen) als belaglose Lamellen und die Innenlamellen (d. h. die mit dem Innenlamellenträger 86 drehfest gekoppelten Lamellen) als beidseitig Reibbelag tragende Lamellen ausgeführt sind. Man könnte ohne weiteres auch eine andere Zuordnung der belaglosen und beidseitig Reibbeläge tragenden Lamellen zu Innenlamellen und Außenlamellen vorsehen, beispielsweise derart, dass das Lamellenpaket 76 der radial äußeren Kupplungsanordnung beidseitig Reibbelag tragende Innenlamellen und belaglose Außenlamellen aufweist, beispielsweise entsprechend dem radial äußeren, zur äußeren Kupplungsanordnung zugehörigen Lamellenpaket der Fig. 2.

Die beidseitig einen Belag aufweisenden Belaglamellen können beispielsweise von einer Trägerlamelle beispielsweise aus Stahl und beidseitig hierauf aufgebrachten Reibbelägen gebildet sein. Die reibbelaglosen Gegenlamellen können ebenfalls als Stahllamellen ausgeführt sein.

Bei einer Doppelkupplung der in Fig. 1 gezeigten Grundkonstruktion mit radial geschachtelt angeordneten Lamellenpaketen ist der axiale Bauraum insbesondere für die radial innere Kupplungsanordnung (Innenkupplung) infolge des Platzbedarfs für beide Betätigungskolben eingeschränkt, so dass es nicht ohne weiteres möglich ist, die axiale Baulänge zu vergrößern und zusätzliche Lamellenpaare vorzusehen, um zum Ausgleich des gegenüber der radial äußeren Kupplungsanordnung geringeren Reibradius die Reibflächenzahl und damit bezogen auf eine gegebene Anpresskraft das maximal übertragbare Drehmoment zu vergrößern. Die Vergrößerung der Reibflächenzahl würde nämlich auf jeden Fall einhergehen mit einer Vergrößerung der axialen Baulänge der radial inneren Kupplungsanordnung und damit der gesamten Doppelkupplung. Beim Beispiel der Fig. 1 weist die radial innere Kupplungsanordnung ein Lamellenpaket 74 mit vier Belaglamellen, nämlich den vier Innenlamellen, und fünf belaglosen Gegenlamellen, nämlich den fünf Außenlamellen, auf, so dass es insgesamt 16 Reibflächen entsprechend 8 Reibflächenpaaren gibt. Auch das Lamellenpaket 76 der radial äußeren Kupplungsanordnung gemäß Fig. 1 und das radial äußere Lamellenpaket gemäß Fig. 2 weist 16 Reibflächen entsprechend 8 Reibflächenpaaren auf. '

Der grundsätzliche Vorteil einer Ausbildung der Lamellenpakete mit beidseitig Belag tragenden Belaglamellen und diesem zugeordneten, belaglosen Gegenlamellen (insbesondere aus Stahl) ist, dass die Gegenlamellen unter Reiblast auf beiden Seiten gleichmäßig erwärmt werden. Ein "Schirmen" der Gegenlamellen infolge einer einseitigen Erwärmung, das zu einer effektiven Reduzierung des mittleren Reibradius und dementsprechend einer Verringerung des maximal übertragbaren Moments führen könnte, wird damit zuverlässig vermieden. Dies ist insbesondere für eine zum Anfahren benutzte Kupplungsanordnung wichtig, so dass die radial äußere Kupplungsanordnung gemäß Fig. 2 in dieser Bauart ausgeführt ist. Betreffend die spezielle Ausführung des Lamellenpakets 76 der radial äußeren Kupplungsanordnung gemäß Fig. 1 wird auf die Ausführungen etwa in der Offenlegungsschrift DE 100 04 179 A1 verwiesen. Die hier verwirklichte Bauweise zeichnet sich durch gegenüber dem radial inneren Lamellenpaket axial dickere Gegenlamellen (die reibbelaglosen Innenlamellen) und beidseitig axial dicke Endlamellen (die das Lamellenpaket axial begrenzenden Außenlamellen, die nur einseitig einen Reibbelag tragen; vgl. Endlamelle 170) aus, um eine vergleichsweise große Wärmekapazität zur Wärmezwischenspeicherung bereitzustellen, wodurch ebenfalls thermische Probleme, etwa das angesprochene "Schirmen", beherrscht bzw. vermieden werden können.

Demgegenüber schlägt die Erfindung nun vor, Außenkupplung und Nebenkupplung hinsichtlich der Ausführung des jeweiligen Lamellenpakets unterschiedlich aufzubauen. Betreffend die radial äußere Kupplungsanordnung kann bzw. soll hierbei an der herkömmlichen Bauart, etwa entsprechend Fig. 1 oder entsprechend der Darstellung in Fig. 2, festgehalten werden, wohingegen die radial innere Kupplungsanordnung bzw. das radial innere Lamellenpaket zumindest teilweise als so genannte "Single-Sided-Kupplung" ausgeführt ist, indem man im Lamellepaket miteinander in Reibeingriff tretende Lamellenpaare vorsieht, von denen beide Lamellen jeweils nur einseitig einen Reibbelag tragen und der Reibbelag der einen Lamelle mit der reibbelaglosen Seite der anderen Lamelle in Reibeingriff tritt. Gemäß einer bevorzugten Ausführungsform entsprechend Fig. 2 sind alle Lamellen bis auf die Endlamelle 200a des radial inneren Lamellenpakets 74a als einseitig belaglose und auf der anderen Seite einen Reibbelag tragende Lamellen ausgeführt. Die Stahlträger der Lamellen sind in Fig. 2 mit 202a bezeichnet, und die von diesen auf einer Seite jeweils getragenen Reibbeläge sind in dieser Figur mit 204a bezeichnet. Betreffend das radial äußere Lamellenpaket 76a sind die beidseitig mit einem Belag ausgeführten Belaglamellen mit 206a und die belaglosen Gegenlamellen (Stahllamellen) 208a bezeichnet.

Gemäß dem Erfindungsvorschlag kann aufgrund des Vorsehens von nur einseitig einen Belag aufweisenden Belaglamellen ohne dazwischen angeordnete Gegenlamellen die Zahl der unterbringbaren Reibflächen ohne Vergrößerung der axialen Baulänge deutlich vergrößert werden. So weist das Lamellenpaket 74a mit seinen sechs Außenlamellen (einschließlich der Endlamelle 200a) und seinen fünf Innenlamellen insgesamt 20 Reibflächen entsprechend zehn Reibflächenpaaren aus.

Wie aus der Figur unmittelbar erkennbar, stützen die einseitig einen Belag aufweisenden Belaglamellen (Single-Sided-Belaglamellen) ihr Moment abwechselnd am Außenlamellenträger bzw. am Innenlamellenträger ab. Jeweils die belaglosen "Rückseiten" der Belaglamellen werden als "Gegenlamelle" für den nächsten Belag genutzt. Diese "Gegenlamellen" werden insoweit einseitig erwärmt und sind damit vom Prinzip her einer gewissen Gefahr des Schirmens infolge dieser einseitigen Erwärmung ausgesetzt. Andererseits entfällt der Nachteil der herkömmlichen Bauart, dass die auf beiden Seiten mit Belägen versehenen Trägerlamellen durch die Belege thermisch isoliert sind und insoweit keine Wärmekapazität zur Zwischenspeicherung von Wärme bereitstellen. Gemäß dem erfindungsgemäßen Ansatz werden, jedenfalls in der bevorzugten Realisierung entsprechend Fig. 2, somit nun alle Lamellen mit ihrer jeweiligen Trägerlamelle als Wärmekapazität thermisch genutzt.

Bevorzugt ist eine derartige Zuordnung der beiden Lamellen-Kupplungsanordnungen 64a und 72a, dass die das Lamellenpaket 74a aufweisende radial innere Kupplungsanordnung 72a im Wesentlichen nicht als Anfahrkupplung, sondern nur als Schaltkupplung oder als Anfahrkupplung mit reduzierter Anfahrenergie eingesetzt wird, so dass die in der Regel maximal anstehende thermische Belastung geringer ist als für die als Anfahrkupplung verwendete radial äußere Kupplungsanordnung 64a. Dies bringt den Vorteil, dass die thermische Belastung der Lamellen des Lamellenpakets 74a vergleichsweise gering gehalten wird und damit das Problem des "Schirmens" in der Praxis nicht oder höchstens in nicht erheblichem Maße auftritt.

Durch die nach dem Erfindungsvorschlag mögliche bzw. vorgesehene Erhöhung der Zahl von Reibflächen ist keine oder zumindest eine gegenüber der herkömmlichen Bauweise merklich geringere Vergrößerung der maximalen Anpresskraft und damit maximalen Flächenpressung für die radial innere Kupplungsanordnung nötig, um - im Hinblick auf die Übertragbarkeit des Motormoments - den geringeren Reibradius der radial inneren Kupplungsanordnung auszugleichen.

Es wurden vorstehend betreffend Fig. 2 nur die Unterschiede gegenüber der Kupplungskonstruktion der Fig. 1 erläutert, und dabei für analoge oder entsprechende Bauteile und Bauteilgruppen die gleichen Bezugszeichen jeweils ergänzt um den kleinen Buchstaben "a" verwendet. Weitere Unterschiede gegenüber der Konstruktion der Fig. 1 sind dem Fachmann durch einen Vergleich der Figuren ersichtlich und ohne weiteres verständlich, und werden - da ohne Relevanz für den Erfindungsvorschlag - hier nicht näher erläutert.

## Patentansprüche

1. Mehrfach-Kupplungseinrichtung, insbesondere Doppel-Kupplungseinrichtung, für einen Kraftfahrzeug-Antriebsstrang zur Momentenübertragung zwischen einer Antriebseinheit und einem Getriebe des Antriebsstrangs, umfassend mehrere unabhängig voneinander betätigbare Lamellen-Kupplungsanordnungen (64, 72; 64a, 72a), von denen eine erste Lamellen-Kupplungsanordnung (64; 64a) einer ersten Getriebeeingangswelle (22) des Getriebes zugeordnet ist und eine zweite Lamellen-Kupplungsanordnung (72; 72a) einer zweiten Getriebeeingangswelle (24) des Getriebes zugeordnet ist,
wobei von der ersten und der zweiten Lamellen-Kupplungsanordnungen eine (64; 64a) wenigstens ein radial äußeres Lamellenpaket (76; 76a) aufweist, das wenigstens ein radial inneres Lamellenpaket (74; 74a) der anderen Lamellen-Kupplungsanordnung (72; 72a) zumindest bereichsweise radial außen umgibt,
wobei wenigstens eine (64; 64a) der Lamellen-Kupplungsanordnungen wenigstens ein Lamellenpaket (76; 76a) aufweist, das mehrere beidseitig einen Reibbelag aufweisenden Belaglamellen (206a) und mehrere mit diesen in Reibeingriff bringbaren, beidseitig reibbelaglosen Gegenlamellen (208a) umfasst,
**dadurch gekennzeichnet,**
**dass** das radial innere Lamellenpaket (74a) mehrere auf einer Seite einen Reibbelag (204a) aufweisende und auf der anderen Seite reibbelaglose Außenlamellen (202a) und mehrere auf einer Seite reibbelaglose und auf der anderen Seite einen Reibbelag (204a) aufweisende Innenlamellen (202a) umfasst, die derart in gegenseitigen Reibeingriff bringbar sind, dass jeweils eine einen Reibelag aufweisende Lamellenseite mit einer reibbelaglosen Lamellenseite in Reibeingriff tritt.

2. Kupplungseinrichtung nach Anspruch 1, **dadurch gekennzeichnet, dass** das radial äußere Lamellenpaket (76a) mehrere beidseitig einen Reibbelag aufweisende Belaglamellen (206a) und mehrere mit diesen in Reibeingriff bringbare, beidseitig reibbelaglose Gegenlamellen (208a) umfasst.

3. Kupplungeinrichtung nach Anspruch 1 und Anspruch 2, **dadurch gekennzeichnet, dass** bezogen auf eine axiale Bezugs-Baulänge das radial innere Lamellenpaket (74a) eine größere Zahl an Reibflächenpaaren als das radial äußere Lamellenpaket (76a) bereitstellt.

4. Kupplungseinrichtung nach Anspruch 2 oder 3, **dadurch gekennzeichnet, dass** die auf einer Seite einen Reibbelag aufweisenden und auf der anderen Seite reibbelaglosen Innenlamellen (202a) und die auf einer Seite einen Reibbelag aufweisenden und auf der anderen Seite reibbelaglosen Außenlamellen (202a) des radial inneren Lamellenpakets (74a) zumindest näherungsweise die gleiche axiale Dicke aufweisen oder/und dünner als die reibbelaglosen Gegenlamellen (208a) des radial äußeren Lamellenpakets (76a) sind.

5. Kupplungseinrichtung nach Anspruch 2, 3 oder 4, **dadurch gekennzeichnet, dass** die beidseitig einen Reibbelag aufweisenden Belaglamellen als Außenlamellen und die beidseitig reibbelagiose Gegenlamellen als Innenlamellen ausgeführt sind.

6. Kupplungseinrichtung nach Anspruch 2, 3 oder 4, **dadurch gekennzeichnet, dass** die beidseitig einen Reibbelag aufweisenden Belaglamellen (206a) als Innenlamellen und die beidseitig reibbelaglose Gegenlamellen (208a) als Außenlamellen ausgeführt sind.

7. Kupplungseinrichtung nach einem der Ansprüche 1 bis 6, **dadurch gekennzeichnet, dass** es sich bei den Lamellen-Kupplungsanordnungen (64a, 70a) um für einen Betrieb unter Einwirkung eines Betriebsmediums, insbesondere Kühlöls, vorgesehene Kupplungsanordnungen handelt, denen im Betrieb Betriebsmedium von einer Betriebsmediumversorgung zuführbar ist.

8. Kupplungseinrichtung nach einem der Ansprüche 1 bis 7, **dadurch gekennzeichnet, dass** die Kupplungsanordnungen vermittels eines jeweiligen hydraulischen Nehmerzylinders auf hydraulischem Wege betätigbar sind.

9. Kraftfahrzeug-Antriebsstrang mit einer Antriebseinheit und einem Getriebe und einer dazwischen angeordneten Kupplungseinrichtung (12a) nach einem der vorhergehenden Ansprüche.

10. Antriebsstrang nach Anspruch 9, **dadurch gekennzeichnet, dass** der das radial äußere Lamellenpaket (76a) aufweisenden Kupplungsanordnung (64a) wenigstens ein Anfahrgang des Getriebes zugeordnet ist.

## Claims

1. Multiple clutch device, in particular double clutch device, for a motor vehicle drive train for transmitting torque between a drive unit and a gearbox of the drive train, comprising a plurality of disc clutch arrangements (64, 72; 64a, 72a) which can be activated independently of one another, a first disc clutch arrangement (64; 64a) of which is assigned to a gearbox input shaft (22) of the gearbox, and a second disc clutch arrangement (72; 72a) of which is assigned to a second gearbox input shaft (24) of the gearbox, wherein one disc clutch arrangement (64; 64a) of the first and second disc clutch arrangements has at least one radially outer disc pack (76; 76a) which surrounds radially on the outside, at least in certain areas, at least one radially inner disc pack (74; 74a) of the other disc clutch arrangement (72; 72a),
wherein at least one disc clutch arrangement (64; 64a) of the disc clutch arrangements has at least one disc pack (76; 76a) which comprises a plurality of lining discs (206a) which have a friction lining on both sides, and a plurality of opposing discs (208a) which do not have a friction lining on both sides on both sides which can be placed in friction engagement with said lining discs (206a),
**characterized**
**in that** the radially inner disc pack (74a) comprises a plurality of outer discs (202a) which have a friction lining (204) on one side and do not have a friction lining on the other side, and a plurality of inner discs (202a) which do not have a friction lining on one side and have a friction lining (204a) on the other side, which outer discs (202a) and inner discs (202a) can be placed in frictional engagement with one another in such a way that in each case one disc side which has a friction lining enters into frictional engagement with a disc side which does not have a friction lining.

2. Clutch device according to Claim 1, **characterized in that** the radially outer disc pack (76a) has a plurality of lining discs (206a) which have a friction lining on both sides, and a plurality of opposing discs (208a) which do not have a friction lining on both sides and can be placed in frictional engagement with said lining discs (206a).

3. Clutch device according to Claim 1 and 2, **characterized in that**, with respect to an axial reference overall length, the radially inner disc pack (74a) makes available a larger number of friction face pairs than the radially outer disc pack (76a).

4. Clutch device according to Claim 2 or 3, **characterized in that** the inner discs (202a) which have a friction lining on one side and do not have a friction lining on the other side and the outer discs (202a) of the radially inner disc pack (74a) which have a friction lining on one side and do not have a friction lining on the other have at least approximately the same axial thickness and/or are thinner than the opposing discs (208a) of the radially outer disc pack (76a) which do not have a friction lining.

5. Clutch device according to Claim 2, 3 or 4, **characterized in that** the lining discs which have a friction lining on both sides are embodied as outer discs and the opposing discs which do not have a friction lining on both sides are embodied as inner discs.

6. Clutch device according to Claim 2, 3 or 4, **characterized in that** the lining discs (206a) which have a friction lining on both sides are embodied as inner discs and the opposing discs (208a) which do not have a friction lining on both sides are embodied as outer discs.

7. Clutch device according to one of Claims 1 to 6, **characterized in that** the disc clutch arrangements (64a, 70a) are clutch arrangements which are provided for operation under the effect of an operating medium, in particular cooling oil, to which arrangements operation medium can be fed from an operating medium supply during operation.

8. Clutch device according to one of Claims 1 to 7, **characterized in that** the clutch arrangements can be activated hydraulically by means of a respective hydraulic slave cylinder.

9. Motor vehicle drive train having a drive unit and a gearbox and a clutch device (12a) which is arranged therebetween, according to one of the preceding claims.

10. Drive train according to Claim 9, **characterized in that** at least a starting gear speed of the gearbox is assigned to the clutch arrangement (64a) which has the radially outer disc pack (76a).

## Revendications

1. Dispositif d'embrayage multiple, notamment dispositif à double embrayage, pour une chaîne cinématique d'un véhicule automobile, pour le transfert de couple entre une unité d'entraînement et une boîte de vitesses de la chaîne cinématique, comprenant plusieurs agencements d'embrayages à disques (64, 72 ; 64a, 72a) pouvant être commandés indépendamment les uns des autres dont un premier agencement d'embrayage à disques (64 ; 64a) est associé à un premier arbre d'entrée de boîte de vitesses (22) de la boîte de vitesses, et un deuxième agencement d'embrayage à disques (72 ; 72a) est associé à un deuxième arbre d'entrée de boîte de vitesses (24) de la boîte de vitesses,
l'un (64 ; 64a) des premier et deuxième agencements d'embrayages à disques présentant au moins un paquet de disques radialement extérieur (76 ; 76a), qui entoure radialement à l'extérieur au moins en partie au moins un paquet de disques radialement intérieur (74 ; 74a) de l'autre agencement d'embrayage à disques (72 ; 72a),
au moins l'un (64 ; 64a) des agencements d'embrayages à disques présentant au moins un paquet de disques (76 ; 76a) qui comprend plusieurs disques de garniture (206a) présentant des deux côtés une garniture de friction et plusieurs disques conjugués (208a) sans revêtement de friction des deux côtés, pouvant être amenés en engagement par friction avec ceux-ci,
**caractérisé en ce que**
le paquet de disques radialement intérieur (74a) comprend plusieurs disques extérieurs (202a) présentant d'un côté une garniture de friction (204a) et sans garniture de friction de l'autre côté, et plusieurs disques intérieurs (202a) sans garniture de friction d'un côté et présentant de l'autre côté une garniture de friction (204a), lesquels peuvent être amenés en engagement de friction mutuel de telle sorte qu'à chaque fois un côté de disque présentant une garniture de friction vienne s'engager par friction avec un côté de disque sans garniture de friction.

2. Dispositif d'embrayage selon la revendication 1, **caractérisé en ce que** le paquet de disques radialement extérieur (76a) comprend plusieurs disques de garniture (206a) présentant des deux côtés une garniture de friction et plusieurs disques conjugués (208a) sans garniture de friction, pouvant être amenés en engagement de friction avec ceux-ci.

3. Dispositif d'embrayage selon la revendication 1 et la revendication 2, **caractérisé en ce que** par rapport à une longueur de revêtement axiale, le paquet de disques radialement intérieur (74a) dispose d'un plus grand nombre de paires de surfaces de friction que le paquet de disques radialement extérieur (76a).

4. Dispositif d'embrayage selon la revendication 2 ou 3, **caractérisé en ce que** les disques intérieurs (202a) présentant d'un côté une garniture de friction et sans garniture de friction de l'autre côté et les disques extérieurs (202a) présentant d'un côté une garniture de friction et sans garniture de friction de l'autre côté, du paquet de disques radialement intérieur (74a), présentent au moins approximativement la même épaisseur axiale et/ou sont plus minces que les disques conjugués (208a) sans garniture de friction du paquet de disques radialement extérieur (76a).

5. Dispositif d'embrayage selon la revendication 2, 3 ou 4, **caractérisé en ce que** les disques de garniture présentant des deux côtés une garniture de friction sont réalisés sous forme de disques extérieurs et les disques conjugués sans garniture de friction des deux côtés sont réalisés sous forme de disques intérieurs.

6. Dispositif d'embrayage selon la revendication 2, 3 ou 4, **caractérisé en ce que** les disques de garniture (206a) présentant des deux côtés une garniture de friction sont réalisés sous forme de disques intérieurs et les disques conjugués (208a) sans garniture de friction des deux côtés sont réalisés sous forme de disques extérieurs.

7. Dispositif d'embrayage selon l'une quelconque des revendications 1 à 6, **caractérisé en ce que** les agencements d'embrayages à disques (64a, 70a) sont des agencements d'embrayages prévus pour fonctionner avec un fluide fonctionnel, notamment de l'huile de refroidissement, auxquels du fluide fonctionnel est acheminé pendant le fonctionnement par une alimentation en fluide fonctionnel.

8. Dispositif d'embrayage selon l'une quelconque des revendications 1 à 7, **caractérisé en ce que** les agencements d'embrayage peuvent être actionnés par voie hydraulique au moyen d'un cylindre récepteur hydraulique respectif.

9. Chaîne cinématique de véhicule automobile comprenant une unité d'entraînement et une boîte de vitesses, et un dispositif d'embrayage (12a) disposé entre elles selon l'une quelconque des revendications précédentes.

10. Chaîne cinématique selon la revendication 9, **caractérisée en ce que** l'agencement d'embrayage (64a) présentant le paquet de disques radialement extérieur (76a) est associé à au moins une vitesse de démarrage de la boîte de vitesses.
